# EUROPEAN PATENT SPECIFICATION

(11) **EP 3 285 624 B1**
(45) Date of publication and mention of the grant of the patent: **09.10.2019**
(21) Application number: 16714926.9
(22) Date of filing: 07.04.2016
(51) Int. Cl.: A47J 31/41, A47J 31/00

(54) **BEVERAGE DISPENSER FOR PREPARING LAYERED BEVERAGES**
GETRÄNKESPENDER ZUR HERSTELLUNG GESCHICHTETER GETRÄNKE
DISTRIBUTEUR DE BOISSON PERMETTANT DE PRÉPARER DES BOISSONS EN COUCHES

(30) Priority: 21.04.2015 EP 15164517
(43) Date of publication of application: 28.02.2018
(73) Proprietor: Société des Produits Nestlé S.A., 1800 Vevey (CH)
(72) Inventor: DUBIEF, Flavien, 1424 Champagne (CH); PERRIN, Alexa, 1073 Savigny (CH)
(74) Representative: Ducreux, Marie
(86) International application number: PCT/EP2016/057655
(87) International publication number: WO 2016/169777

(56) References cited:
- WO-A1-2009/037493
- US-A- 2 771 913
- US-A1- 2005 095 341
- US-A1- 2013 014 857

## Description

### Field of the invention

The present invention relates to beverage dispensers dispensing beverages in a drinking container, the beverages visually presenting different superposed layers.

### Background of the invention

Beverage with layers of different natures are known from the state of the art, especially in the field of coffee and milk beverages like latte macchiato or in the field of alcoholic beverages like cocktails. Usually these beverage are prepared manually due to the difficulty of keeping the layers well separated.

EP-A1-1681969 has disclosed a method for dispensing a beverage with the visual appearance of multi-layers obtained from dilution of concentrates in proper dilution ratios. A first liquid layer is first delivered with a controlled density. A second liquid layer is diluted to a density that is lower than the density of the first liquid layer so that the first and second layers form a stable layered arrangement with the second liquid layer of lower density remaining spatially above the first liquid layer to provide a visually distinct layer as compared to the first liquid layer in the container. A perfect separation of the layers is not always possible due to the fact that the second top layer can mix with the first bottom layer. For this reason, in this prior art, it is proposed to produce foam at the top of the first layer in order to reduce the velocity of the component of the second layer when it is delivered and avoid the mixing with the first layer. Accordingly, the dispenser comprises a whipper at the outlet of the mixing chamber. Yet foam is not always desired by the customer, in particular for the preparation of cold layered beverages and especially fruit or syrup layered beverages.

US 2013/0014857 has disclosed a dispenser and methods for filling a holder with separated liquid layers. One method consists in placing a liquid feed conduit next to the bottom of the holder and dispensing liquids therethrough in order of increasing density. Each successive liquid is formed under the previous liquid layer. In this method the density of the liquids is fixed and the liquid with a high density is always positioned at the bottom of the holder whereas a liquid with a low density is always positioned at the bottom of the holder. It is not possible to play indifferently with the position of a liquid in the final beverage.

An object of the invention is to address at least some of the drawbacks of said prior arts.

In particular, an object of the present invention is to provide a dispenser for preparing a layered beverage enabling the user to select the nature of the different layers (strawberry, peach, mango, ...) and, for each selected nature, the position of said layer in the drinking container.

### Summary of the invention

In a first aspect of the invention, there is provided a dispenser for preparing a beverage, said beverage being dispensed in a drinking container and said beverage being composed of at least two different layers of beverage components presenting different densities, said dispenser comprising :
- at least one container for storing a soluble beverage ingredient,
- at least one device for dosing a dose of soluble beverage ingredient from the at least one container,
- a supply of diluent, preferably water,
- at least one chamber for dissolving the dose of soluble beverage ingredient with diluent to produce a beverage component, said chamber comprising a beverage outlet for dispensing the beverage component,
- a dispensing area for positioning the drinking container,
wherein the dispenser is configured for filling the drinking container with the beverage component from the bottom of the container.

The dispenser is configured for dispensing beverages in a drinking container, preferably a transparent glass, in order to provide a visual effect. Actually the dispenser produces beverages visually composed of at least two different beverage components, said beverage components presenting different densities.

According to one mode of preparation, at least two different beverage components can differ by their densities and their natures, the two components being prepared from different soluble beverage ingredients.

According to another mode of preparation, the at least two different beverage components can differ by their densities only, the two components being prepared from the same soluble beverage ingredient. In this last mode, it is possible to prepare a layered beverage wherein the layers differ visually by the intensity of their colour (the colour being the same for ally layers) and by the intensity of their taste (the upper layer being the more diluted layer and the bottom layer being the less diluted layer).

The dispenser comprises at least one container for storing a soluble beverage ingredient. The different superposed layers of beverage components are produced from said soluble beverage ingredients.

The soluble beverage ingredients can be soluble powders or concentrates like syrups or concentrated fruit or vegetable juices or purees.

The container is a multi-portion container from which a portion of soluble beverage ingredient is dosed for each beverage preparation.

The dispenser comprises at least one device for dosing a dose of soluble beverage ingredient from the at least one container.

For a powder, the container usually comprises a tank and a powder outlet. Usually the powder outlet is positioned at the bottom of the tank. The dosing device is preferably a rotatable volumetric dosing member. The dosing device can be comprised in the list of a dosing screw, a dosing auger or perforated discs. Depending on the type of container for storing the soluble beverage powder, the dosing device can be integrated inside said container or provided at the outlet of said container. According to the preferred embodiment the dosing device is placed inside the container and positioned at the bottom of the container. It is preferably a dosing screw. Such a screw displaces a volume of powder from the container to the powder outlet. This sub-assembly composed of the container and the dosing device is usually identified as a canister in current beverage dispensers.

For a concentrate, the container can be a bag-in-box comprising a flexible tube for cooperating with a peristaltic dosing pump or a bottle.

The dispenser comprises at least one chamber for dissolving a dose of soluble beverage ingredient with diluent to produce a beverage component.

Generally this chamber comprises an opening for introducing the soluble powder or the concentrate, at least one diluent inlet and a beverage component outlet. The chamber is usually designed so as to make an efficient contact of the soluble powder or the concentrate with the diluent and to enable the dissolution of the powder or concentrate to produce the beverage component.

Usually the mixing chamber is positioned under the outlet of the soluble beverage ingredient container so that the powder or the concentrate can be delivered in the chamber by gravity fall.

The chamber can comprise a rotating whipper activated by a motor to improve the dissolution or the chamber can be whipperless.

According to one embodiment, the chamber can comprise an opening for introducing the soluble beverage ingredient and at least one diluent inlet configured for introducing the diluent in the form of a jet inside the chamber and the chamber is configured so that a whirlpool of liquid is created in the chamber and the jet of diluent entering the chamber hits said whirlpool as long as diluent is introduced in the chamber. A dissolution chamber working according to this principle is described for example in WO 2008/071613.

According to another embodiment, the chamber can comprise a tube designed for improving mixing of diluent and beverage ingredient, preferably a concentrate, like the mixing tube described in WO 2010/115888.

The dispenser comprises a supply of diluent that is generally water, hot, ambient and/or cold water. According to the preferred embodiment the supply of diluent is cold water.

According to one embodiment the dispenser can comprise only one chamber for the preparation of all the beverage components. Since the preparation is made in successive steps for each beverage component, the chamber can be used successively for preparing different beverage components from different soluble beverage ingredients stored in different storing containers.

According to the preferred embodiment, the dispenser comprises :
- a plurality of containers for storing different soluble beverage ingredients,
- a plurality of devices for dosing a dose of soluble beverage ingredient, each of said dosing devices cooperating with one dedicated container for storing a soluble beverage ingredient,
- a plurality of chambers for dissolving the dose of soluble beverage ingredient with diluent, each of said chambers cooperating with one dedicated container storing a soluble beverage ingredient.

Such a dispenser enables the preparation of beverage components different in terms of natures and densities and offering the possibility of creation of an important variety of layered beverages.

As each of the chambers cooperates with one dedicated container storing a soluble beverage ingredient, the risk of cross-contamination is limited, which is of paramount importance for the preparation of beverages with layered of different colours.

The dispenser comprises a dispensing area for positioning the drinking container, the beverage components being dispensed in said drinking container. Once a drinking container is positioned in said area, the dispenser is configured for filling the drinking container with the beverage component from the bottom of the container.

Preferably the dispenser comprises a delivering device or is configured for receiving a delivering device for taking the beverage component from the beverage outlet of the at least one chamber, guiding said beverage component through the drinking container and delivering said beverage component at the bottom of the drinking container.

The delivering device guides the beverage components through the internal space of the drinking container down to the bottom of the drinking container and delivers the beverage components at the bottom of the drinking container only. Consequently the drinking container is filled from the bottom.

The delivering device can be configured to be removable from the dispenser, and optionally disposable.

Preferably the delivering device comprises at least one tube connected directly or indirectly to the beverage outlet of the at least one chamber

Preferably the bottom end of the tube does not touch the bottom of the drinking container so that the delivery of the beverage component is not obstructed.

The delivering device can comprise several tubes each of them cooperating with a chamber outlet or the delivering device can comprise only one tube at one end said tube separating in several tubes at the other end for cooperating with the different chambers outlets.

The dispenser preferably comprises a controller to execute a set of instructions to :
- receive a beverage recipe selection, said selection including the relative position of the at least two different layers of beverage component in the drinking container,
- calculate the required density of each layer of beverage component based on the selection of its position relative to the other layer(s),
- successively prepare and deliver the layers of beverage components by dilution of at least one soluble beverage ingredient in order to reach the calculated required density, the order of preparation and delivery consisting in preparing and delivering in the drinking container a lower density layer prior to a higher density layer.

The dispenser can comprise an input and output device operable to receive the beverage recipe selection, the selection including the step of defining the relative position of the at least two different layers of beverage component in the drinking container.

The input and output device is preferably a touch screen.

The input and output device preferably provides a representation of the at least two different layers of beverage component and enable the selection of the relative position of the at least two different layers of beverage component as desired for preparation in the drinking container.

The controller calculates the required density of each layer of beverage component based on the selection of its position relative to the other layer(s). Preferably each beverage component presents a density differing by at least 5 % from the density of the beverage component composing one next layer.

Preferably the quantities of soluble ingredients and the sum of the volumes of diluent used to dilute said soluble ingredient to prepare the beverage components are set such that the final beverage, once mixed by the consumer, presents a pleasant taste and flavour.

Finally the controller controls the successive preparations and deliveries of the layers of beverage components by dilution of at least one of the soluble beverage ingredient. The preparation consists in diluting a soluble beverage ingredient with the diluent in a ratio soluble beverage ingredient/diluent such that the calculated required density is obtained. The order of preparation of each layer is controlled in order to deliver in the drinking container a lower density layer prior to a higher density layer.

Accordingly each new layer having a density higher than the precedent layer can push up the precedent layer of lower density when it is delivered by the delivery device at the bottom of the drinking container.

Preferably the dispenser comprises a device for identifying the soluble beverage ingredient stored in the at least one container and the controller is configured for setting the dilution ratio in the chambers to get a desired density of the beverage component based on the identification of the soluble beverage ingredient.

The identification of the soluble beverage ingredient preferably relates to the physical nature (powder or liquid, syrup or puree) and, if a liquid, the density of the soluble beverage ingredient.

The device for identifying the soluble beverage ingredient can be a machine readable code reader, a bar code reader, a RFID reader, a reflected light frequency reader, an optical reader, a mechanical code reader.

According to a second aspect, there is provided a method for dispensing a beverage with a dispenser such as described above, said method comprising at least the steps of :
- presenting a beverage recipe to a customer,
- receiving a beverage recipe selection, the selection including at least the sub-step of defining the relative position of the at least two different layers of beverage component in the drinking container,
- calculating the required density of each layer of beverage component based on the definition of its position relative to the other layer(s),
- successively preparing and delivering the layers of beverage components by dilution of at least one of the soluble beverage ingredient in order to reach the calculated required density, the order of preparation and delivery in the drinking container consisting in preparing a lower density layer prior to a higher density layer.

In this text:
- the term "soluble" means water soluble,
- the term "soluble beverage ingredient" means powder or liquid concentrate, that is dissolved or diluted for preparing a beverage,
- the term " beverage component" means a component obtained by dilution of a soluble beverage ingredient, presenting an homogenised density, and used for forming one layer of a final layered beverage,
- the term " beverage" means the final beverage that has been prepared by delivering different beverage components of different densities and issued from the dilution of soluble beverage concentrate(s) in a drinking container.
- the term "dissolution" is interpreted as the reconstitution of a beverage component with diluent starting from a soluble beverage ingredient and as a dilution too.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic representation of one first embodiment of a dispenser according to the present invention,
- Figure 2 is a schematic representation of one second embodiment of a dispenser according to the present invention,
- Figure 3 is a representation of a layered beverage susceptible to be dispensed by a dispenser according to the present invention,
- Figure 4 illustrates the steps of filling of the drinking container according to the process of the present invention,
- Figure 5 illustrates the process of preparation of a layered beverage with a dispenser according to the present invention.

### Detailed description of the drawings

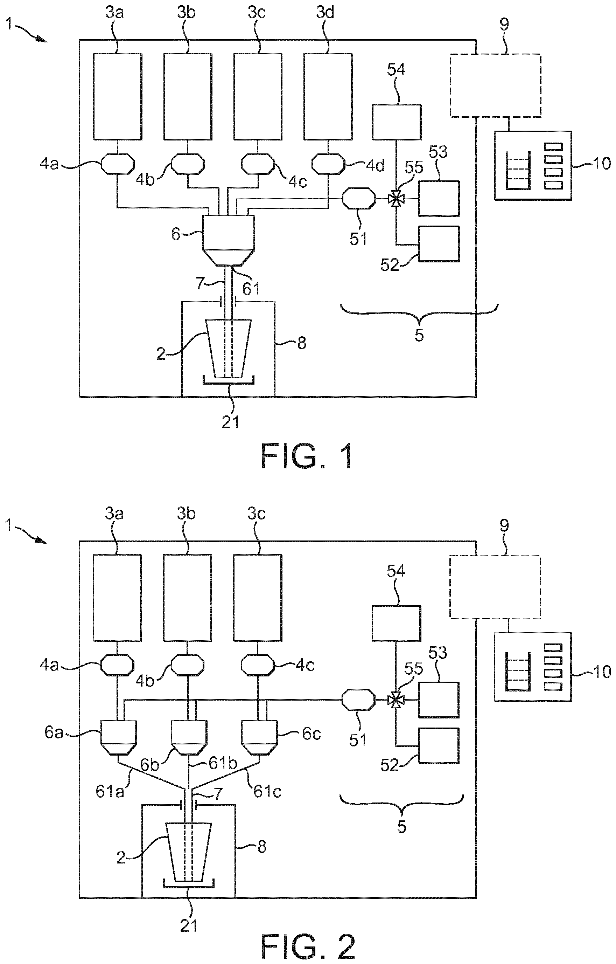

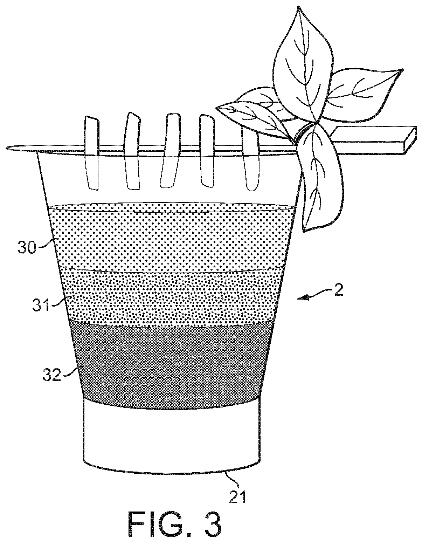

**Figure 1** illustrates a dispenser 1 according to the invention. The dispenser is configured for dispensing multi-layered beverages in a drinking container 2 as illustrated in **Figure 3****.** Preferably the drinking container 2 is transparent so that the consumer can see the visual effect of superposing several layers, here three layers, of different visual aspects.

The beverage in the drinking container 2 is composed of three different beverage components 30, 31, 32. The beverage components 30, 31, 32 differ by their densities. The densities of the beverage components increase progressively from the top layer to the bottom layer.

The beverage components 30, 31, 32 can be obtained from the same soluble beverage ingredient dissolved and diluted at different ratios with a diluent so that they present different densities. As a result the different layers present the same taste and colour, but the layers differ visually by the strength of the colour and the strength of the taste that increase from the top layer down to the bottom layer. For example the layers can be prepared from the same strawberry syrup, diluted at different ratios with water in order to get three layers of strawberry beverage differing by their densities but also by the intensities of the red colour and the intensities of the strawberry taste.

The beverage components 30, 31, 32 can be obtained from different soluble beverage ingredients dissolved with a diluent so that they present different densities. As a result the different layers can present different tastes and different colours. For example the layers can be prepared from three different concentrates like strawberry syrup, orange juice and pineapple puree, diluted at different ratios with water in order to get three layers of different beverage components differing by their densities but also by the colours (red, orange, yellow) and the tastes.

The dispenser of **Figure 1** comprises several containers 3a, 3b, 3c, 3d for storing different soluble beverage ingredients. These ingredients can be soluble beverage powders like instant coffee, tea powder, chocolate powder, milk power, fruit or vegetable powders. These ingredients can be concentrates like coffee, tea, chocolate, milk concentrates, syrups, fruit or vegetable purees.

The dispenser 1 comprises devices 4a, 4b, 4c, 4d for dosing a dose of soluble beverage ingredient from the containers. Each dosing device is dedicated to one container. If the beverage ingredient stored in the container is a powder, the dosing device can be ...

If the beverage ingredient stored in the container is a liquid, the dosing device can be a peristaltic pump coupled to a flexible tube attached to the container (also called a bag-in-box).

The dispenser comprises a supply of water 5. This supply usually comprises a pump 51 pumping either hot water, ambient water or cold water from corresponding sources 52, 53, 54 by activation of a selection valve 55.

The dispenser comprises a chamber 6 for mixing and dissolving at least one dose of soluble beverage ingredient with a dose of diluent by to produce a beverage component. The chamber can be fed with only one soluble beverage ingredient or with doses of different soluble beverage ingredients to produce one beverage ingredient, for example peach and mango purees to produce a mango peach diluted puree.

The chamber 6 comprises a beverage outlet 6 for dispensing the beverage component prepared in the chamber 6.

The dispenser comprises a dispensing area 8 in which the customer can position the drinking container 2 so that the beverage components can be dispensed in the container.

The dispenser comprises a delivering device 7 for taking the beverage component prepared in the chamber 6 and dispensed from the beverage outlet 61 of the chamber and for guiding said beverage component through the drinking container 2 and for delivering said beverage component at the bottom 21 of the drinking container.

Accordingly each beverage component prepared in the chamber 6 fills the drinking container 6 from its bottom 21.

**Figure 2** illustrates another embodiment of a dispenser according to the invention. This dispenser 1 presents the same features as the dispenser of Figure 1 except that it comprises three chambers 6a, 6b, 6c for mixing and dissolving a dose of soluble beverage ingredient with a dose of diluent. Each chamber 6a, 6b, 6c cooperates with one dedicated container 3a, 3b, 3c respectively for storing a soluble beverage ingredient. Accordingly each chamber is dedicated to the dissolution of one type of soluble ingredient only. This configuration is recommended when the soluble beverage ingredients stored in containers 3a, 3b, 3c present such different natures that they cannot be dissolved with the same chamber, as for example a soluble powder and a concentrate. The chamber for dissolving powder is generally a dissolution chamber wherein powder is impacted by jets or swirled by diluent. The chamber for dissolving a concentrate can be a simple tube or mixing nozzle.

This configuration can present the advantage of limiting cross contamination of one beverage component by another beverage component too.

All the beverage outlets 61a, 61b, 61c of the chambers 6a, 6b, 6c respectively cooperate with the same delivering device 7 for taking the beverage component prepared in each chamber, for dispensing this beverage component from the beverage outlet and for guiding said beverage component through the drinking container 2 and for delivering said beverage component at the bottom 21 of the drinking container.

In an alternative the dispenser can comprise several delivering devices 7 and each beverage outlet 61a, 61b, 61c can cooperate with one of said dedicated delivering device.

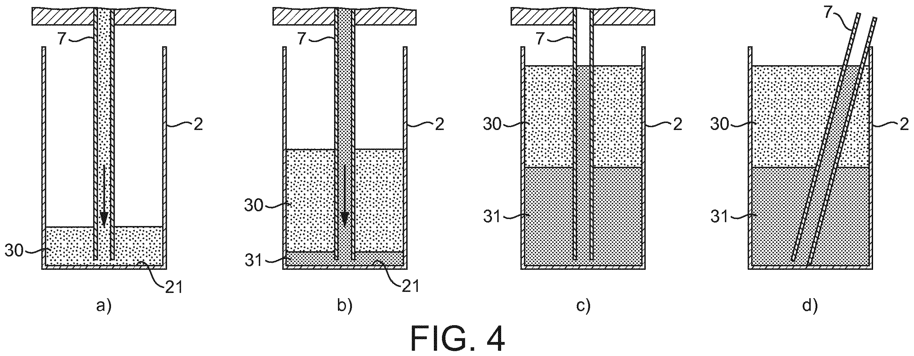

The filling of the drinking container 2 is illustrated in **Figure 4** for the preparation of a two layer beverage comprising two beverage components 30, 31 presenting different densities. In step a), the first beverage component 30 is prepared and dispensed in the container 2 through the delivering device 7. This device 7 is a simple tube positioned between the discharge outlet 61 of the chamber and the bottom 21 of the drinking container. The bottom outlet of the tube 7 is preferably positioned near the bottom surface of the container so as to avoid any obstruction.

In step b), the second beverage component 31 is prepared and dispensed in the container 2 through the delivering device 7. The second beverage component 31 presents a greater density than the second beverage component 30 and consequently fills the container 20 by the bottom and simultaneously pushes the first beverage component 30 up without mixing with it.

In step c), the preparation of the beverage is finished.

In step d), the delivering device 7 can be detached from the dispenser and be used as disposable agitator or straw.

Both dispensers 1 of Figures 1 and 2 comprise a controller 9 configured for:
- actuating the dosing devices 4a, 4b, 4c, 4d in order to dispense a particular dose of soluble beverage ingredient in a chamber 6, 6a, 6b, 6c,
- actuating the diluent supply 5 in order to dispense a particular dose of cold, ambient or hot water in a chamber 6, 6a, 6b, 6c,
- eventually actuating the motor of a whipper device within at least one of the chambers 6, 6a, 6b, 6c.

Both dispensers 1 of Figures 1 and 2 comprise a user interface 10, or an input and output device, operable to receive a beverage recipe selection, the selection including the step of defining the relative position of the at least two different layers of beverage component in the drinking container. Accordingly the consumer is able to define the vertical order of the beverage components in the drinking container.

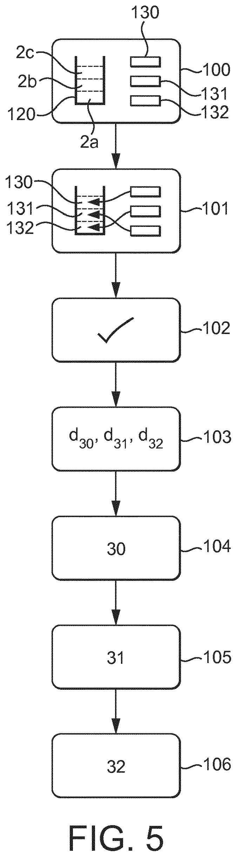

**Figure 5** illustrates the steps of preparation of a multi layered beverage implemented by the controller 9 of the dispenser.

In step 100, the user interface 10 of the dispenser presents to the customer a representation 120 of the drinking container and a list 130, 131, 132 of beverage components that can be introduced in the drinking container in the form of layers.

In step 101 the consumer is able to select the order of the beverage components 130, 131, 132 in the layers in the drinking container 120.

In step 102, the consumer validates his/her selection.

In step 103, based on the selection made in step 102 and illustrated in step 101, the controller 9 calculates the required density d₃₀, d₃₁, d₃₂ of each layer of beverage component 30, 31, 32 respectively so that:
- the beverage component 32 in the layer at the bottom of the container presents a higher density than both other beverage components 30, 31,
- the beverage component 30 in the layer at the top of the container presents a lower density than both other beverage components 31, 32,
- the beverage component 31 in the layer in the middle of the container presents a density lower than beverage component 32 and higher than beverage component 30.

In step 104, the controller launches the preparation of the beverage component 30 presenting the lower density so that it is the first delivered at the bottom of the drinking container.

Then in step 105, the controller launches the preparation of the beverage component 31 presenting a higher density than the first beverage component and so that it is delivered at the bottom of the drinking container.

Then in step 106, the controller launches the preparation of the beverage component 32 presenting the highest density and so that it is delivered at the bottom of the drinking container.

The controller 9 of the dispenser is particularly configured to execute a set of instructions to successively :
- receive this beverage recipe selection including the relative position of the different layers of beverage component in the drinking container, then
- calculate the required density of each layer of beverage component based on the selection of its position relative to the other layer(s), then
- successively prepare and deliver the layers of beverage components by dilution of (at least) one of the soluble beverage ingredient in order to reach the calculated required density, the order of preparation and delivery consisting in preparing and delivering in the drinking container a lower density layer prior to a higher density layer.

Once the density of each beverage component has been defined, each beverage component is prepared and delivered in the drinking container starting from the beverage component presenting the lower density and progressively preparing and delivering other beverage components, a lower density component being always prepared and dispensed prior to a higher density component.

The beverage dispenser of the present invention presents the advantage of enabling customers to prepare layered beverages based on an order of the layers defined by the customers themselves.

The dispenser and the method of the present invention present the advantage of enabling customers to prepare layered beverages different from the well-known recipes for layered beverages.

The dispenser and the method of the present invention present the advantage of enabling customers to prepare layered beverages without the systematic presence of foam at the top of the beverage.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| dispenser | 1 |
| drinking container | 2 |
| bottom | 21 |
| layers | 2a, 2b, 2c |
| soluble ingredient container | 3a, 3b, 3c, 3d |
| dosing device | 4a, 4b, 4c, 4d |
| diluent supply | 5 |
| pump | 51 |
| hot water supply | 52 |
| cold water supply | 53 |
| ambient water supply | 54 |
| valve | 55 |
| dissolution chamber | 6, 6a, 6b, 6c |
| beverage outlet | 61, 61a, 61b, 61c |
| delivering device | 7 |
| dispensing area | 8 |
| controller | 9 |
| user interface | 10 |
| beverage component | 30, 31, 32 |

## Claims

1. Dispenser (1) for preparing a beverage, said beverage being dispensed in a drinking container (2), preferably a transparent container, and said beverage being composed of at least two different layers of beverage component presenting different densities, said dispenser comprising :
- at least one container (3a, 3b, 3c) for storing a soluble beverage ingredient,
- at least one device (4a, 4b, 4c) for dosing a dose of soluble beverage ingredient from the at least one container,
- a dispensing area (8) for positioning the drinking container (2),
wherein the dispenser is configured for filling the drinking container with a beverage component from the bottom (21) of the container,
**characterized in that** said dispenser comprises :
- a supply of diluent (5), preferably water,
- at least one chamber (6, 6a, 6b, 6c) for dissolving the dose of soluble beverage ingredient with diluent to produce the beverage component, said chamber comprising a beverage outlet (61, 61a, 61b, 61c) for dispensing the beverage component.

2. Dispenser according to Claim 1, wherein the dispenser comprises :
- a plurality of containers (3a, 3b, 3c, 3d) for storing different soluble beverage ingredients,
- a plurality of devices (4a, 4b, 4c, 4d) for dosing a dose of soluble beverage ingredient, each of said dosing devices cooperating with one dedicated container (3a, 3b, 3c, 3d) for storing a soluble beverage ingredient,
- a plurality of chambers (6a, 6b, 6c, 6d) for dissolving the dose of soluble beverage ingredient with diluent, each of said chambers cooperating with one dedicated container (3a, 3b, 3c, 3d) storing a soluble beverage ingredient.

3. Dispenser according to Claim 1 or 2, wherein the dispenser comprises a delivering device (7) or is configured for receiving a delivering device (7) for taking the beverage component from the beverage outlet (61, 61a, 61b, 61c) of the at least one chamber, guiding said beverage component through the drinking container and delivering said beverage component at the bottom (21) of the drinking container.

4. Dispenser according to any one of the precedent claims, wherein the delivering device (7) comprises at least one tube.

5. Dispenser according to the precedent claim, wherein the at least one tube is removable and, optionally, disposable.

6. Dispenser according to any one of the precedent claims, wherein the dispenser comprises a controller (9) to execute a set of instructions to :
- receive a beverage recipe selection, said selection including the relative position of the at least two different layers of beverage component in the drinking container,
- calculate the required density of each layer of beverage component based on the selection of its position relative to the other layer(s),
- successively prepare and deliver the layers of beverage components by dilution of at least one of the soluble beverage ingredient in order to reach the calculated required density, the order of preparation and delivery consisting in preparing and delivering in the drinking container a lower density layer prior to a higher density layer.

7. Dispenser according to any one of the precedent claims, wherein it comprises an input and output device (10) operable to receive a beverage recipe selection, the selection including the step of defining the relative position of the at least two different layers of beverage component in the drinking container.

8. Dispenser according to Claim 6 or 7, wherein it comprises a device for identifying the soluble beverage ingredient stored in the at least one container, and wherein the controller is configured for setting the dilution ratio in the chambers to get a desired density of the beverage component based on the identification of the soluble beverage ingredient.

9. Method for dispensing a beverage with a dispenser according to any one of Claims 1 to 8, said method comprising at least the steps of:
- presenting a beverage recipe to a customer,
- receiving a beverage recipe selection, the selection including the sub-step of defining the relative position of the at least two different layers of beverage component in the drinking container,
- calculating the required density of each layer of beverage component based on the definition of its position relative to the other layer(s),
- successively preparing and delivering the layers of beverage components by dilution of at least one of the soluble beverage ingredient in order to reach the calculated required density, the order of preparation and delivery in the drinking container consisting in preparing a lower density layer prior to a higher density layer.

## Patentansprüche

1. Spender (1) zur Zubereitung eines Getränks, wobei das Getränk in einem Trinkbehälter (2), vorzugsweise einem transparenten Behälter, abgegeben wird und das Getränk aus mindestens zwei verschiedenen Schichten einer Getränkekomponente mit unterschiedlichen Dichten besteht, wobei der Spender Folgendes umfasst:
- mindestens einen Behälter (3a, 3b, 3c) zum Aufbewahren einer löslichen Getränkebestandteils,
- mindestens eine Vorrichtung (4a, 4b, 4c) zum Dosieren einer Dosis eines löslichen Getränkebestandteils aus dem mindestens einen Behälter,
- einen Ausgabebereich (8) zum Positionieren des Trinkbehälters (2),
wobei der Spender dazu konfiguriert ist, den Trinkbehälter vom Boden (21) des Behälters aus mit einer Getränkekomponente zu füllen,
**dadurch gekennzeichnet, dass** der Spender Folgendes umfasst:
- eine Zufuhr eines Verdünnungsmittels (5), vorzugsweise Wasser,
- mindestens eine Kammer (6, 6a, 6b, 6c) zum Auflösen der Dosis eines löslichen Getränkebestandteils mit Verdünnungsmittel zur Herstellung der Getränkekomponente, wobei die Kammer einen Getränkeauslauf (61, 61a, 61b, 61c) zum Abgeben der Getränkekomponente umfasst.

2. Spender nach Anspruch 1, wobei der Spender Folgendes umfasst:
- eine Vielzahl von Behältern (3a, 3b, 3c) zum Aufbewahren verschiedener löslicher Getränkebestandteile,
- eine Vielzahl von Vorrichtungen (4a, 4b, 4c, 4d) zum Dosieren einer Dosis eines löslichen Getränkebestandteils, wobei jede der Dosiervorrichtungen mit einem speziellen Behälter (3a, 3b, 3c, 3d) zum Aufbewahren eines löslichen Getränkebestandteils zusammenwirkt,
- eine Vielzahl von Kammern (6a, 6b, 6c, 6d) zum Auflösen der Dosis des löslichen Getränkebestandteils mit Verdünnungsmittel, wobei jede der Kammern mit einem speziellen Behälter (3a, 3b, 3c, 3d) zum Aufbewahren eines löslichen Getränkebestandteils zusammenwirkt.

3. Spender nach Anspruch 1 oder 2, wobei der Spender eine Abgabevorrichtung (7) umfasst oder zum Aufnehmen einer Abgabevorrichtung (7) zum Entnehmen der Getränkekomponente von dem Getränkeauslauf (61, 61a, 61b, 61c) der mindestens einen Kammer, zum Führen der Getränkekomponente durch den Trinkbehälter und zum Abgeben der Getränkekomponente am Boden (21) des Trinkbehälters konfiguriert ist.

4. Spender nach einem der vorhergehenden Ansprüche, wobei die Abgabevorrichtung (7) mindestens eine Röhre umfasst.

5. Spender nach dem vorhergehenden Anspruch, wobei die mindestens eine Röhre abnehmbar und gegebenenfalls wegwerfbar ist.

6. Spender nach einem der vorhergehenden Ansprüche, wobei der Spender eine Steuerung (9) zum Ausführen eines Satzes von Anweisungen umfasst zum:
- Aufnehmen einer Auswahl von Getränkerezepturen, wobei die Auswahl die relative Position der mindestens zwei verschiedenen Schichten einer Getränkekomponente in dem Trinkbehälter einschließt,
- Berechnen der erforderlichen Dichte jeder Schicht einer Getränkekomponente basierend auf der Auswahl ihrer Position im Verhältnis zu der/den anderen Schicht(en),
- sukzessives Zubereiten und Abgeben der Schichten von Getränkekomponenten durch Verdünnen mindestens eines der löslichen Getränkebestandteile, um die berechnete erforderliche Dichte zu erreichen, wobei die Reihenfolge der Zubereitung und Abgabe darin besteht, eine Schicht mit geringerer Dichte vor einer Schicht mit höherer Dichte zuzubereiten und in den Trinkbehälter abzugeben.

7. Spender nach einem der vorhergehenden Ansprüche, wobei er eine Ein- und Ausgabevorrichtung (10) umfasst, die zum Aufnehmen einer Auswahl von Getränkerezepturen betreibbar ist, wobei die Auswahl den Schritt des Definierens der relativen Position der mindestens zwei verschiedenen Schichten einer Getränkekomponente in dem Trinkbehälter umfasst.

8. Spender nach Anspruch 6 oder 7, wobei er eine Vorrichtung zum Identifizieren des in dem mindestens einen Behälter aufbewahrten löslichen Getränkebestandteils umfasst, und wobei die Steuerung zum Einstellen des Verdünnungsverhältnisses in den Kammern konfiguriert ist, um eine gewünschte Dichte der Getränkekomponente basierend auf der Identifizierung des löslichen Getränkebestandteils zu erhalten.

9. Verfahren zum Ausgeben eines Getränks mit einem Spender nach einem der Ansprüche 1 bis 8, wobei das Verfahren mindestens die folgenden Schritte umfasst:
- Präsentieren einer Getränkerezeptur vor einem Kunden,
- Aufnehmen einer Auswahl von Getränkerezepturen, wobei die Auswahl den Teilschritt des Definierens der relativen Position der mindestens zwei verschiedenen Schichten einer Getränkekomponente in dem Trinkbehälter einschließt,
- Berechnen der erforderlichen Dichte jeder Schicht einer Getränkekomponente basierend auf der Definition ihrer Position im Verhältnis zu der/den anderen Schicht(en),
- sukzessives Zubereiten und Abgeben der Schichten von Getränkekomponenten durch Verdünnen mindestens eines der löslichen Getränkebestandteile, um die berechnete erforderliche Dichte zu erreichen, wobei die Reihenfolge der Zubereitung und Abgabe in den Trinkbehälter darin besteht, eine Schicht mit geringerer Dichte vor einer Schicht mit höherer Dichte zuzubereiten.

## Revendications

1. Distributeur (1) pour la préparation d'une boisson, ladite boisson étant distribuée dans un récipient de boisson (2), de préférence un récipient transparent et ladite boisson étant composée d'au moins deux couches différentes de composant de boisson présentant des densités différentes, ledit distributeur comprenant :
- au moins un récipient (3a, 3b, 3c) de stockage d'un ingrédient de boisson soluble,
- au moins un dispositif (4a, 4b, 4c) pour doser une dose d'ingrédient de boisson soluble depuis l'au moins un récipient,
- une zone de distribution (8) pour positionner le récipient de boisson (2),
dans lequel le distributeur est configuré pour le remplissage du récipient de boisson avec un composant de boisson depuis le fond (21) du récipient,
**caractérisé en ce que** ledit distributeur comprend :
- une alimentation en diluant (5), de préférence de l'eau,
- au moins une chambre (6, 6a, 6b, 6c) pour dissoudre la dose d'ingrédient de boisson soluble avec un diluant pour produire le composant de boisson, ladite chambre comprenant une sortie de boisson (61, 61a, 61b, 61c) pour distribuer le composant de boisson.

2. Distributeur selon la revendication 1, dans lequel le distributeur comprend :
- une pluralité de récipients (3a, 3b, 3c, 3d) pour stocker différents ingrédients de boisson solubles,
- une pluralité de dispositifs (4a, 4b, 4c, 4d) pour doser une dose d'ingrédient de boisson soluble, chacun desdits dispositifs de dosage coopérant avec un récipient dédié (3a, 3b, 3c, 3d) pour stocker un ingrédient de boisson soluble,
- une pluralité de chambres (6a, 6b, 6c, 6d) pour dissoudre la dose d'ingrédient de boisson soluble avec un diluant, chacune desdites chambres coopérant avec un récipient dédié (3a, 3b, 3c, 3d) stockant un ingrédient de boisson soluble.

3. Distributeur selon la revendication 1 ou 2, le distributeur comprenant un dispositif de délivrance (7) ou est conçu pour recevoir un dispositif de délivrance (7) pour prendre le composant de boisson depuis la sortie de boisson (61, 61a, 61b, 61c) de l'au moins une chambre, guider ledit composant de boisson à travers le récipient de boisson et délivrer ledit composant de boisson au niveau du fond (21) du récipient de boisson.

4. Distributeur selon l'une quelconque des revendications précédentes, dans lequel le dispositif de livraison (7) comprend au moins un tube.

5. Distributeur selon la revendication précédente, dans lequel l'au moins un tube est amovible et éventuellement jetable.

6. Distributeur selon l'une quelconque des revendications précédentes, dans lequel le distributeur comprend un contrôleur (9) pour exécuter un ensemble d'instructions pour :
- recevoir une sélection de recette de boisson, ladite sélection comprenant la position relative des au moins deux couches différentes de composant de boisson dans le récipient de boisson,
- calculer la densité souhaitée de chaque couche de composant de boisson en fonction de la sélection de sa position par rapport à la ou les autres couches,
- préparer et délivrer successivement les couches de composants de boisson par dilution d'au moins un de l'ingrédient de boisson soluble afin d'atteindre la densité requise calculée, l'ordre de préparation et de délivrance consistant à préparer et délivrer dans le récipient de boisson une couche de densité inférieure avant une couche de densité supérieure.

7. Distributeur selon l'une quelconque des revendications précédentes, dans lequel il comprend un dispositif d'entrée et de sortie (10) pouvant fonctionner pour recevoir une sélection de recette de boisson, la sélection comprenant l'étape de définition de la position relative des au moins deux couches différentes de composant de boisson dans le récipient de boisson.

8. Distributeur selon la revendication 6 ou 7, dans lequel il comprend un dispositif pour identifier l'ingrédient de boisson soluble stocké dans l'au moins un récipient et dans lequel le contrôleur est configuré pour régler le rapport de dilution dans les chambres pour obtenir une densité souhaitée du composant de boisson sur la base de l'identification de l'ingrédient de boisson soluble.

9. Procédé pour distribuer une boisson avec un distributeur selon l'une quelconque des revendications 1 à 8, ledit procédé comprenant au moins les étapes consistant à :
- présenter une recette de boisson à un client,
- recevoir une sélection de recette de boisson, la sélection comprenant la sous-étape de définition de la position relative des au moins deux couches différentes de composant de boisson dans le récipient de boisson,
- calculer la densité requise de chaque couche de composant de boisson sur la base de la définition de sa position par rapport à la ou les autres couches,
- préparer et délivrer successivement les couches de composants de boisson par dilution d'au moins un de l'ingrédient de boisson soluble afin d'atteindre la densité requise calculée, l'ordre de préparation et de délivrance dans le récipient de boisson consistant à préparer une couche de densité inférieure avant une couche de densité supérieure.
